# EUROPEAN PATENT SPECIFICATION

(11) **EP 3 979 556 B1**
(45) Date of publication and mention of the grant of the patent: **24.05.2023**
(21) Application number: 21189157.7
(22) Date of filing: 02.08.2021
(51) Int. Cl.: H04L 9/40, G06F 21/30, G06F 21/36, G06F 21/31, G06F 3/0488, G06F 3/04886, H04L 9/32

(54) **ELECTRONIC COMMUNICATION DEVICE FOR PERFORMING AN AUTHENTICATION OPERATION**
ELEKTRONISCHE KOMMUNIKATIONSVORRICHTUNG ZUR DURCHFÜHRUNG EINES AUTHENTIFIZIERUNGSVORGANGS
DISPOSITIF DE COMMUNICATION ÉLECTRONIQUE PERMETTANT D'EFFECTUER UNE OPÉRATION D'AUTHENTIFICATION

(30) Priority: 30.09.2020 EP 20199393
(43) Date of publication of application: 06.04.2022
(73) Proprietor: Rubean AG, 81379 München (DE)
(72) Inventor: SPITZ, Stephan, 85757 Karlsfeld (DE)
(74) Representative: Patentship Patentanwaltsgesellschaft mbH

(56) References cited:
- EP-A1- 1 475 721
- US-A1- 2006 206 919
- US-A1- 2018 165 443

## Description

### TECHNICAL FIELD

The invention relates to secure electronic transactions. More specifically, the invention relates to an electronic communication device, in particular a mobile electronic communication device, such as a smartphone, for performing a secure authentication operation using a PIN pad.

### BACKGROUND OF THE INVENTION

More and more electronic transactions can be performed using a mobile electronic communication device, such as a smartphone. In order to increase the security of such electronic transactions often a successful authentication by a user of the device is required. An authentication operation often used, for instance, for unlocking a mobile electronic communication device, online banking or online payment is the entry of a usually 4-digit PIN (personal identification number), an eCode or TAN (transaction authentication number) by the user via a physical PIN pad or a virtual PIN pad displayed on a touch display of the mobile electronic communication device.

Conventionally a lot of electronic payment transactions between a merchant and a customer, who wants to pay, for instance, for goods or services of the merchant, often involve an interaction between a point-of-sale (POS) terminal of the merchant and a payment card (e.g. credit card or debit card) of the customer. After the customer interfaces the payment card with the POS terminal, and the POS terminal reads the account number from the payment card, the POS terminal may generate an online authorization request (e.g. authorization amount, and account number), and transmit the authorization request to a payment server. If the customer's account has a credit or balance that is sufficient to process the payment, the payment server generally settles the authorized amount with the customer's account, generates an authorization response message, and transmits the authorization response message to the POS terminal.

Document US 2006/206919 A1 discloses a method for authenticating a user for use of a server computing device.

Due to the widespread adoption of smartphones, tablet computers and other types of COTS (commercial-off-the-shelf) devices in more and more electronic payment transactions POS terminals are being replaced, for instance, by smartphones in that for processing a payment transaction a smartphone of a merchant interacts with a payment card and/or another smartphone of a customer. Often the authorization of the payment transaction requires the customer to enter a PIN or the like, i.e. security relevant data of the customer, into a virtual or physical PIN pad of the merchant smartphone and/or customer smartphone. Therefore, it has to be ensured that the security relevant data of the customer for authorizing the payment transaction are processed by the merchant smartphone and/or customer smartphone in a secure manner.

### SUMMARY OF THE INVENTION

It is an object of the invention to provide an electronic communication device, in particular a mobile electronic communication device, such as a smartphone, and an authentication server for performing a secure authentication operation using a PIN pad, in particular a virtual PIN pad of the electronic communication device.

The foregoing and other objects are achieved by the subject matter of the independent claims. Further embodiments and implementation forms are apparent from the dependent claims, the description and the figures.

According to a first aspect, an electronic communication device for performing an authentication session with an authentication server, in particular for a payment transaction is disclosed. The electronic communication device comprises a communication interface configured to receive for the authentication session a random bit string representing a random number from the authentication server and mapping information from a security server, wherein the mapping information defines a mapping of each of a plurality of integer values to a respective substring representing a respective random number of the random bit string. The electronic communication device further comprises a PIN pad configured to generate, in response to each of a sequence of operations of the PIN pad by a user, a respective PIN pad signal, and a processing circuitry configured to generate based on each PIN pad signal a respective input integer value, e.g. in the range from 0 to 9, and to determine based on the mapping information for the respective input integer value the respective substring of the random bit string. The communication interface is further configured, once a pre-defined number of input integer values have been entered and, thus, a pre-defined number of substrings of the random bit string have been determined, to transmit the plurality of substrings of the random bit string to the authentication server for processing the authentication session.

In an embodiment, the processing circuitry is further configured to encrypt the plurality of substrings of the random bit string and the communication interface is configured to transmit the encrypted plurality of substrings of the random bit string to the authentication server.

In an embodiment, the electronic communication device further comprises a memory configured to store the random bit string and/or the plurality of substrings of the random bit string.

In an embodiment, at least two of the plurality of substrings of the random bit string have the same size.

In an embodiment, the communication interface is configured to receive for a further authentication session from the authentication server a further random bit string and further mapping information from the security server for obtaining a further mapping configured to map each of the plurality of integer values to a respective substring of the further random bit string. The PIN pad is configured to generate, in response to each of a further sequence of operations of the PIN pad by the user, a respective further PIN pad signal. The processing circuitry is configured to generate based on each further PIN pad signal a respective further input integer value, e.g. in the range from 0 to 9, and to determine based on the further mapping information for the respective further input integer value the respective substring of the further random bit string. The communication interface is further configured, once a pre-defined number of further input integer values have been entered and, thus, a pre-defined number of substrings of the further random bit string have been obtained, to transmit the plurality of substrings of the further random bit string to the authentication server for processing the further authentication session.

In an embodiment, the electronic communication device comprises a touch display and the PIN pad is a virtual PIN pad displayed on the touch display.

In an embodiment, the virtual PIN pad comprises a plurality of graphical symbols and the touch display is configured to sequentially display a plurality of image frames, including a first image frame and a second image frame, wherein the first image frame, for each of the plurality of graphical symbols, comprises a first portion of the respective graphical symbol and wherein the second image frame, for one or more of the plurality of graphical symbols, comprises a second portion of the respective graphical symbol.

In an embodiment, the processing circuitry is further configured to change, for each authentication session, a position and/or a size of the virtual PIN pad displayed by the touch display.

In an embodiment, the plurality of image frames comprises a third image frame, wherein the third image frame, for one or more of the plurality of graphical symbols, comprises the first portion of the respective graphical symbol.

In an embodiment, the plurality of image frames comprises a fourth image frame, wherein the fourth image frame, for one or more of the plurality of graphical symbols, comprises a portion of a different graphical symbol of the plurality of graphical symbols.

In an embodiment, for one or more of the plurality of graphical symbols, the respective graphical symbol is a combination of the first portion and the second portion of the respective graphical symbol.

In an embodiment, the processing circuitry is further configured to generate the plurality of image frames for each authentication session.

In an embodiment, the processing circuitry is further configured to determine for each authentication session a respective position of the respective graphical symbol in the plurality of image frames and to arrange, for each of the plurality of graphical symbols, the respective first portion and the respective second portion of the respective graphical symbol based on the respective position of the respective graphical symbol.

In an embodiment, the processing circuitry is further configured to change, for each authentication session, the respective position of the respective graphical symbol in the plurality of image frames.

In an embodiment, the plurality of graphical symbols comprise a plurality of numerical digits.

In an embodiment, each respective graphical symbol of the plurality of graphical symbols comprises a plurality of pixels, wherein the first portion of the respective graphical symbol comprises a respective first subset of the plurality of pixels and the second portion of the respective graphical symbol comprises a respective second subset of the plurality of pixels.

According to a second aspect, an authentication server for performing an authentication session with an electronic communication device is provided. The authentication server comprises a processing circuitry configured to generate a random bit string for the authentication session and a communication interface configured to send the random bit string for the authentication session to the electronic communication device. The communication interface is further configured to receive a plurality of substrings of the random bit string from the electronic communication device. The processing circuitry is further configured to determine based on mapping information for each of the plurality of substrings of the random bit string a respective input integer value and to further process the authentication session based on the input integer values.

In an embodiment, the authentication server further comprises a random number generator and the processing circuitry is configured to generate the random bit string based on the random number generator.

The communication interface is configured to receive the mapping information from a security server.

In an embodiment, the communication interface is configured to receive the mapping information from the security server, in response to generating the random bit string or sending the random bit string to the security server.

In an embodiment, the mapping information received from the security server is encrypted and/or digitally signed and the processing circuitry is configured to decrypt and/or verify the digital signature of the mapping information.

According to a third aspect an electronic payment system is provided, comprising an electronic communication device according to the first aspect, an authentication server according to the second aspect and a security server configured to provide the mapping information.

According to a fourth aspect a method for performing an authentication session between an electronic communication device and an authentication server is provided. The method comprises the steps of:
generating a random bit string by the authentication server;
generating by a PIN pad of the electronic communication device a respective PIN pad signal, in response to each of a sequence of operations of the PIN pad by a user;
determining based on each PIN pad signal a respective input integer value;
mapping based on mapping information each of the input integer values to a respective substring of the random bit string;
transmitting the plurality of substrings of the random bit string to the authentication server; and
mapping based on the mapping information the plurality of substrings of the random bit string to the plurality of input integer values for processing the authentication session.

The method according to the fourth aspect of the present invention can be performed by the electronic communication device according to the first aspect and the authentication server according to the second aspect of the present invention. Thus, further features of the method according to the fourth aspect of the present invention result directly from the functionality of the electronic communication device according to the first aspect and the authentication server according to the second aspect of the present invention as well as their different embodiments described above and below.

According to a fifth aspect, a computer program product comprising a non-transitory computer-readable storage medium for storing program code which causes a computer or a processor to perform the method according to the fourth aspect, when the program code is executed by the computer or the processor, is provided.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating an electronic payment system according to an embodiment, including an electronic communication device according to an embodiment and an authentication server according to an embodiment;
Fig. 1a shows a schematic diagram illustrating in more detail an electronic communication device according to an embodiment in the form of a smartphone;
Fig. 1b shows a schematic diagram illustrating mapping information used by an electronic payment system for obfuscating a PIN;
Fig. 2 shows a schematic diagram illustrating an electronic payment system according to a further embodiment, including an electronic communication device according to an embodiment and an authentication server according to an embodiment;
Fig. 3 shows a schematic diagram illustrating an electronic payment system according to a further embodiment, including an electronic communication device according to an embodiment and an authentication server according to an embodiment;
Fig. 4 shows a signaling diagram illustrating the process flow implemented by the components of an electronic payment system according to an embodiment,
Figs. 5a, 5b show schematically a first and a second image frame of a plurality of image frames displayed on a touch display of an electronic communication device according to an embodiment for performing a secure authentication procedure using a virtual PIN pad of the device;
Fig 5c shows schematically the visual impression of a user looking at the touch display of an electronic communication device according to an embodiment for performing a secure authentication procedure using a virtual PIN pad of the device; and
Fig. 6 shows a flow diagram illustrating steps of a method according to an embodiment.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

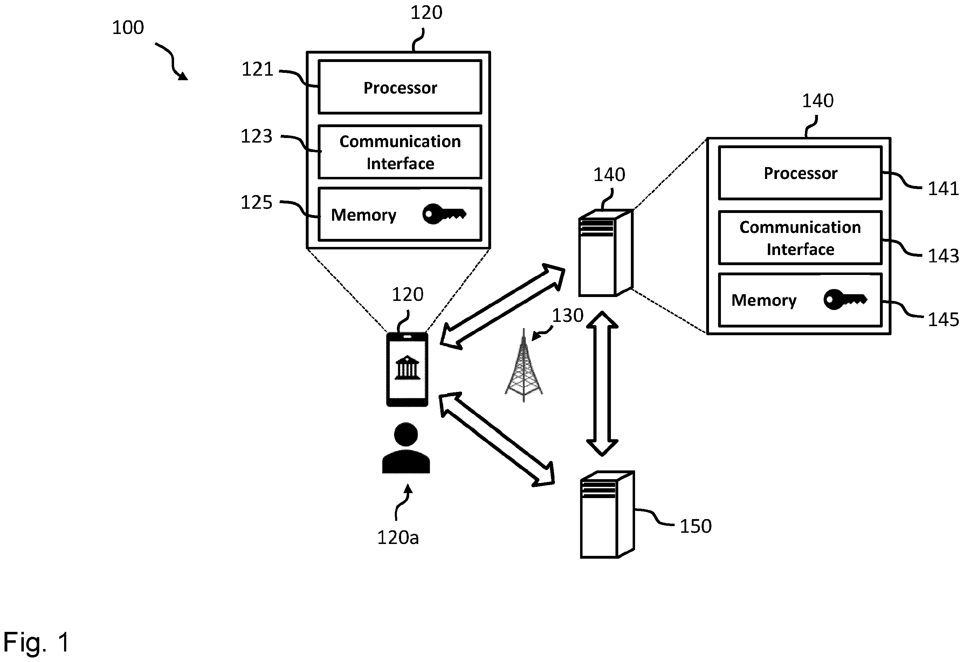

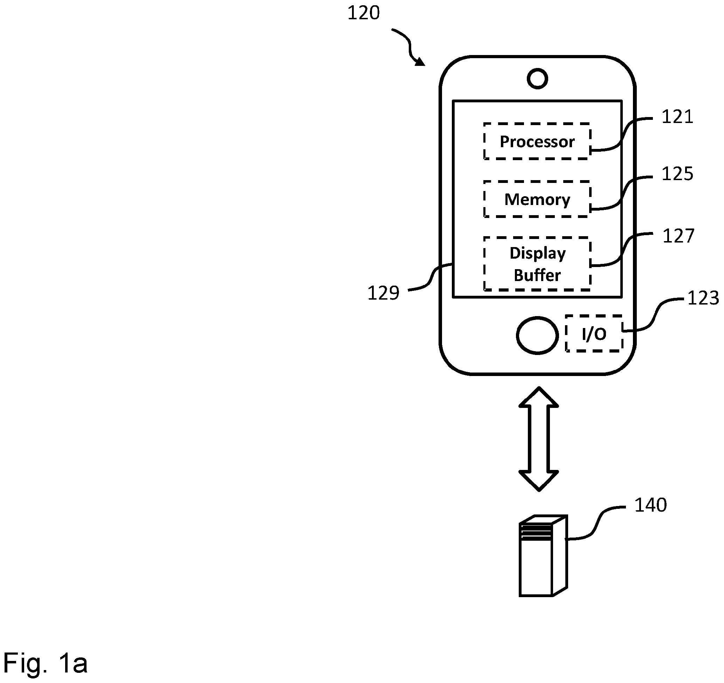

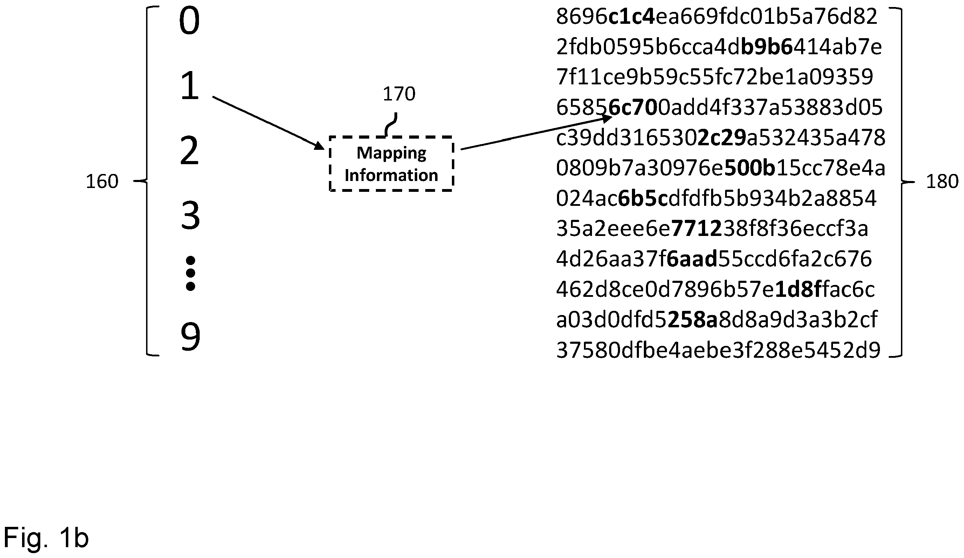

Figure 1 shows a schematic diagram illustrating an electronic payment system 100 according to an embodiment for processing an electronic payment transaction between a mobile electronic communication device 120 operated by a mobile user 120a and an authentication or payment server 140. The mobile electronic communication device 120 may be, for instance, a smartphone 120, tablet computer 120 or the like operated by the user 120a. As illustrated in figure 1, the mobile electronic communication device 120 may comprise a processing circuitry 121, also referred to as processor 121, for processing data, a communication interface 123 for communicating with the other components of the payment system 100 and a memory 125 for storing data and cryptographic keys.

Likewise, the authentication server 140 may comprise a processing circuitry 141, also referred to as processor 141 for processing data, a communication interface 143 for communicating with the other components of the payment system 100 and a memory 145 for storing data and cryptographic keys. As illustrated in figure 1, the mobile electronic communication device 120 may be configured to communicate with the authentication server 140 via a wireless and/or wired communication network 130.

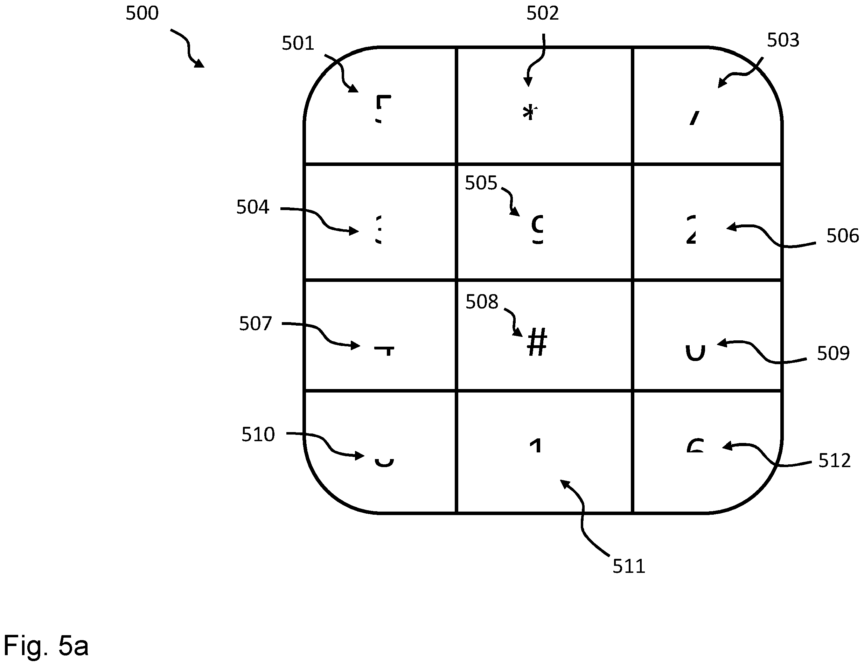

Figure 1a shows a schematic diagram illustrating in more detail the mobile electronic communication device 120 according to an embodiment in the form of a smartphone 120. As illustrated in figure 1a, in addition to the processor 121, the communication interface 123 and the memory 125 the smartphone 120 may comprise a display buffer 127 and a touch display 129 for displaying a virtual PIN pad 500, as will be described in more detail below in the context of figures 5a-c.

As will be described in more detail below under further reference to figure 1b, for performing an authentication session for authenticating, for instance, a payment transaction the processing circuitry 141 of the authentication server 140 is configured to configured to generate a random bit string, such as the exemplary random bit string 180 shown in figure 1b for the authentication session. In an embodiment, the authentication server 140 comprises a random number generator for generating the random bit string 180. In an embodiment, the random number generator may be implemented by the processing circuitry 141 of the authentication server 140.

The communication interface 143 of the authentication server 140 is configured to send the random bit string 180 for the authentication session to the electronic communication device 120. The communication interface 123 of the electronic communication device 120 is configured to receive the random bit string 180 for the current authentication session from the authentication server 140. Moreover, the communication interface 123 of the electronic communication device 120 is configured to receive for the current authentication session mapping information 170 from the security server 150.

As illustrated in figure 1b, the mapping information 170 defines a mapping of each of the plurality of candidate integer values 160 to a respective substring of the random bit string 180. For instance, in the example shown in figure 1b, the candidate integer value "1" is mapped to the substring "6c70" of the random bit string 180. In an embodiment, if the random bit string comprises, for instance, 100 bits, the mapping defined by the mapping information may map the integer value "0" to the first ten bits of the random bit string 180, the integer value "1" to the second ten bits of the random bit string 180, the integer value "2" to the third ten bits of the random bit string and so on. In an embodiment, new mapping information 170 is provided by the security server 150 for each new authentication session between the electronic communication device 120 and the authentication server 140 for providing security similar to a One-Time-Pad (OTP).

The PIN pad, e.g. virtual PIN pad 500 of the electronic communication device 120 is configured to generate, in response to each of a sequence of operations of the PIN pad 500 by the user 120a, a respective PIN pad signal. The processing circuitry 121 of the electronic communication device 120 is configured to generate based on each PIN pad signal a respective input integer value, for instance, in the range from 0 to 9, and to determine based on the mapping information 170 for the respective input integer value the respective substring of the random bit string 180, as illustrated in figure 1b. In an embodiment, the random bit string 180 and/or the plurality of substrings of the random bit string 180 may be stored in the memory 125 of the electronic communication device 120.

The communication interface 123 of the electronic communication device 120 is further configured, once a pre-defined number of input integer values have been entered (e.g. 4 or 6 input integer values) and, thus, a pre-defined number of substrings of the random bit string 180 have been determined, to transmit the plurality of substrings of the random bit string 180 to the authentication server 140 for further processing the authentication session. In an embodiment, the processing circuitry 121 of the electronic communication device 120 is configured to encrypt the plurality of substrings of the random bit string 180 and the communication interface 123 is configured to transmit the encrypted plurality of substrings of the random bit string 180 to the authentication server 140.

Once the communication interface 143 of the authentication server 140 has received the plurality of substrings of the random bit string 180 from the electronic communication device 120, the processing circuitry 141 of the authentication server 140 is further configured to determine based on mapping information 170 provided by the security server 150 for the current authentication session for each of the plurality of substrings of the random bit string 180 the respective input integer value and to further process the authentication session based on the input integer values retrieved in this way. In an embodiment, the mapping information 170 received from the security server 150 may be encrypted and/or digitally signed, wherein the processing circuitry 141 of the authentication server 140 is configured to decrypt and/or verify the digital signature of the mapping information 170.

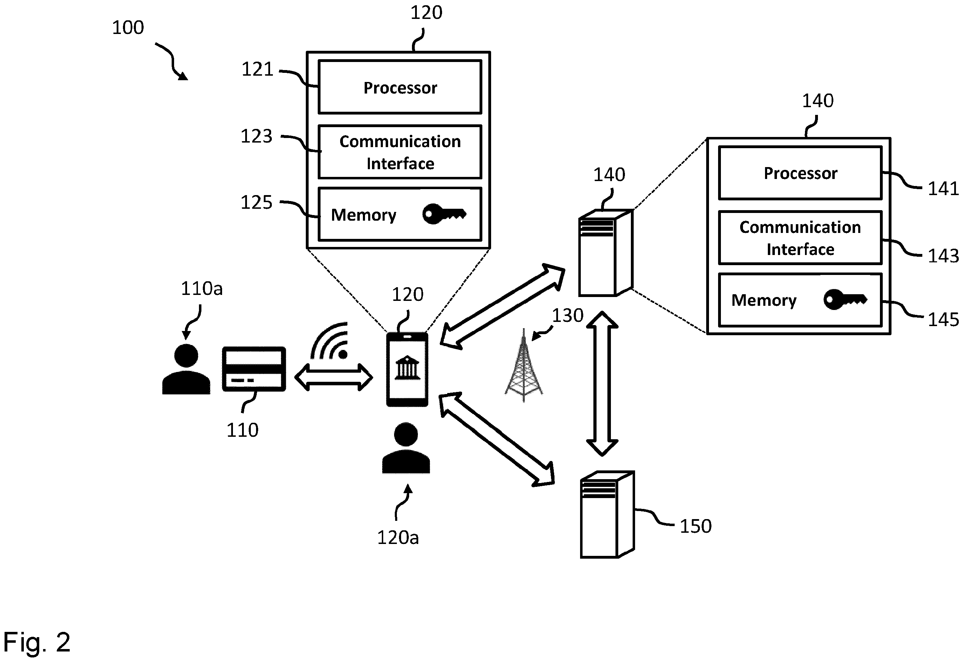

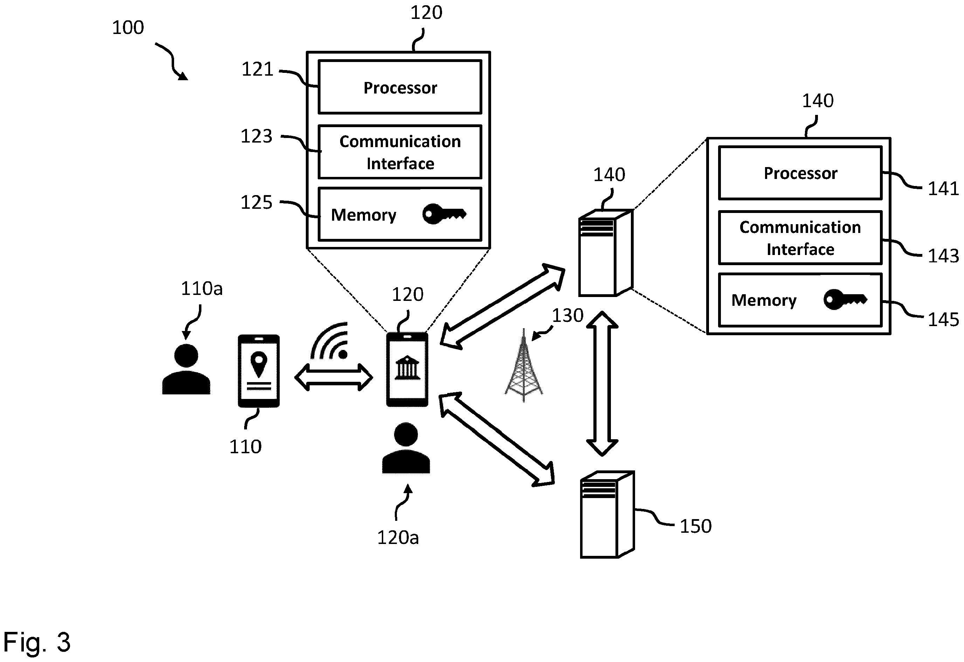

Further embodiments of the electronic payment system 100 are shown in figures 2 and 3. In the embodiment shown in figure 2, the mobile electronic communication device 120 is a mobile merchant communication device 120 operated by a merchant 120a for processing a payment transaction with a payment card 110 of a customer 110a. In the embodiment shown in figure 3, the mobile electronic communication device 120 is a mobile merchant communication device 120 operated by a merchant 120a for processing a payment transaction with a smartphone 110 of a customer 110a. In an embodiment, the communication interface 123 of the mobile merchant communication device 120 may comprise an NFC interface for communicating with the payment card or smartphone 110 of the customer 110a.

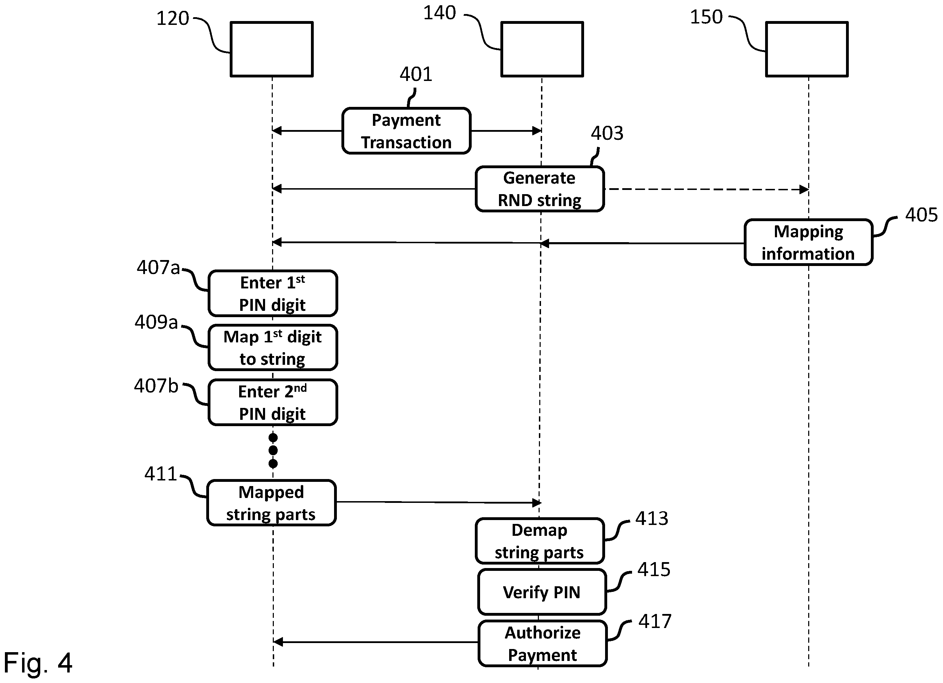

Figure 4 shows a signaling diagram illustrating the interaction of the mobile electronic communication device, in particular smartphone 120 with the authentication server 140 and the security server 150. In figure 4 the following steps are illustrated, some of which already have been described in the context of figures 1, 1a, 1b, 2 and 3 above.

In step 401 of figure 4, the electronic communication device 120 and the authentication server 140 start a payment transaction. In an embodiment, the electronic communication device 120 may start executing a payment application which initiates the payment transaction by establishing communication with the authentication server 140. In an embodiment, the payment application may ask the user 120a of the electronic communication device 120 to enter a PIN.

In step 403 of figure 4, in response to the request to make a payment transaction, the authentication server 140 generates a random bit string 180 (such as the exemplary random bit string 180 shown in figure 1b) and sends the random bit string 180 to the electronic communication device 120. As illustrated in figure 4, the authentication server 140 may in step 403 further send the random bit string 180 to the security server 150 or inform the security server 150 that the random bit string 180 has been generated. This message from the authentication server 140 to the security server 150 may include a payment transaction identifier.

In step 405 of figure 4, the security server 150 provides the mapping information 170 to the authentication server 140 and the mobile electronic communication device 120 (possibly together with the payment transaction identifier). In an embodiment, the security server 150 may be configured to generate the mapping information 170 based on the random bit string 180 provided by the authentication server 140. As already described above, the mapping information 170 defines a mapping of the integer values 160 in the range from 0 to 9 to portions, i.e. substrings of the random bit string 180.

In step 407a of figure 4, the user 120a of the electronic communication device 120 enters a first PIN digit into the PIN pad 500. As already described above, in response thereto, the PIN pad 500 generates a first PIN pad signal. Based on the first PIN pad signal the processing circuitry 121 generates a first integer value in the range from 0 to 9 corresponding to the first PIN digit entered by the user 120a.

In step 409a of figure 4, the processing circuitry 121 of the electronic communication device 120 obfuscates the first integer value by mapping based on the mapping information 170 received from the security server 150 the first integer value to a first substring of the random bit string 180 for obtaining a first obfuscated or encoded integer value, which may be stored in the memory 125 of the electronic communication device 120.

Steps 407a and 409a are repeated as exemplary illustrated by step 407b until all PIN digits, such as 4 or 6 PIN digits have been entered by the user 120a.

Once this pre-defined number of PIN digits have been entered and, thus, obfuscated integer values have been obtained based on the mapping information 170, in step 411 of figure 4 the communication interface 123 of the electronic communication device 120 transmits the encoded integer values, i.e. the substrings of the random bit string 180 to the authentication server 140.

In step 413 of figure 4, the processing circuitry 141 of the authentication server 140 deobfuscates the obfuscated, i.e. encoded integer values received from the electronic communication device 120 by performing the inverse mapping of step 409a (and repeated steps of step 409a), i.e. mapping based on the mapping information 170 the substrings of the random bit string 180 received from the electronic communication device 120 to the integer values entered by the user 120a.

In step 415 of figure 4, the authentication server 140 verifies the integer values obtained by the inverse mapping performed in step 413.

In step 417 of figure 4, if the PIN verification in step 415 is successful, the authentication server 140 authorizes the payment and sends a corresponding message to the electronic communication device 120.

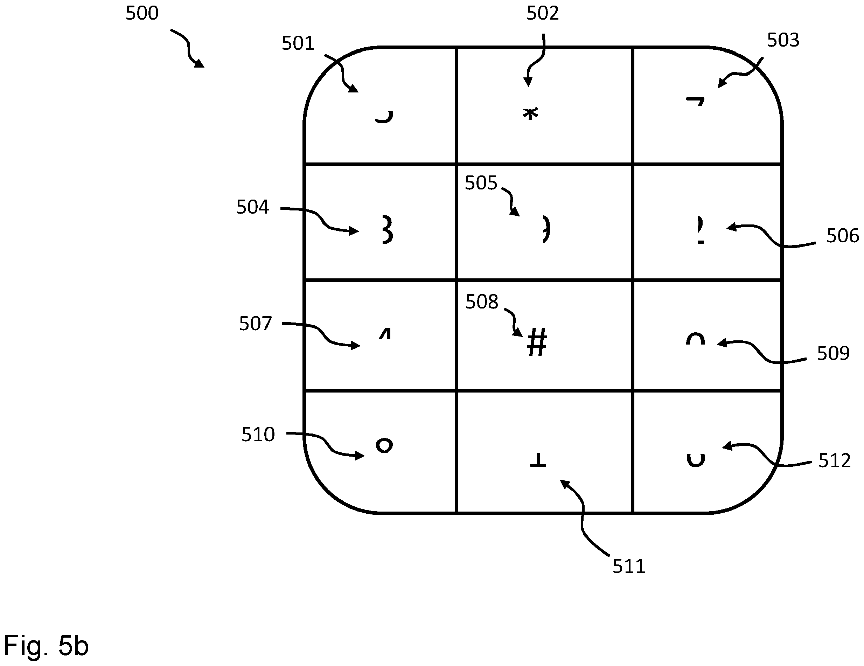

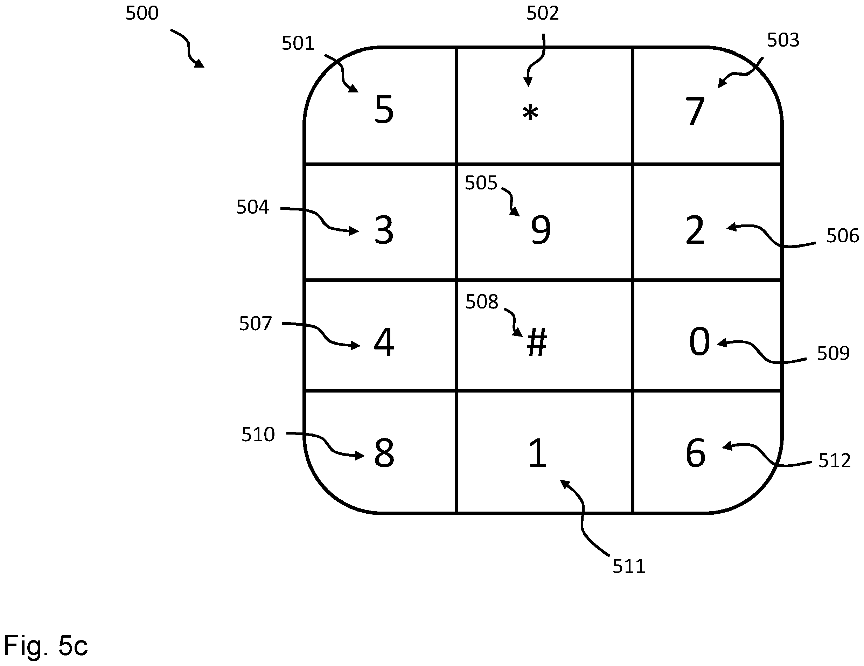

As already described above, in an embodiment, the electronic communication device 120, e.g. smartphone 120 may comprise a touch display 129 for performing the secure authentication operation using a virtual PIN pad 500 including a plurality of graphical symbols 501-512 (further illustrated in figures 5a, 5b and 5c). In the embodiment illustrated in figures 5a, 5b and 5c the plurality of graphical symbols 501-512 comprise the single numerical digits "0", "1", "2", "3", "4", "5", "6", "7", "8", "9" as well as the symbols "#" and "*". As will be appreciated, a PIN, TAN, eCode or similar kind of number may be defined by a sequence of the single numerical digits "0", "1", "2", "3", "4", "5", "6", "7", "8", "9".

In an embodiment, the touch display 129 of the mobile electronic communication device 120 is configured to sequentially display a plurality of image frames, including a first image frame and a second image frame. Figure 5a shows schematically an exemplary first image frame of the plurality of image frames displayed on the touch display 129 of the mobile electronic communication device 120. As can be taken from figure 5a, the first image frame, for each of the plurality of graphical symbols 501-512 of the virtual PIN pad 500, comprises only a first portion of the respective graphical symbol 501-512 of the virtual PIN pad 500. For instance, for the graphical symbol "9" 505, the first image frame comprises, i.e. shows only a left portion thereof.

Figure 5b shows schematically an exemplary second image frame of the plurality of image frames displayed on the touch display 129 of the mobile electronic communication device 120. As can be taken from figure 5b, the second image frame, for one or more of the plurality of graphical symbols 501-512 of the virtual PIN pad 500, comprises only a second portion different to the first portion of the respective graphical symbol 501-512 of the virtual PIN pad 500. For instance, for the graphical symbol "9" 505, the second image frame comprises, i.e. shows only a right portion thereof.

In an embodiment, each respective graphical symbol of the plurality of graphical symbols 501-512 of the virtual PIN pad 500 comprises a plurality of pixels, wherein the first portion of the respective graphical symbol 501-512 of the virtual PIN pad 500 (shown by way of example in figure 5a) comprises a respective first subset of the plurality of pixels and the second portion of the respective graphical symbol 501-512 of the virtual PIN pad 500 (shown by way of example in figure 5b) comprises a respective second subset of the plurality of pixels different from the first subset of the plurality of pixels.

As will be appreciated, for the exemplary first and second image frames shown in figures 5a and 5b, the respective graphical symbol 501-512 of the virtual PIN pad 500 is a combination of the first portion and the second portion of the respective graphical symbol 501-512 of the virtual PIN pad 500. By displaying these images frames in sequence the touch display 129 of the electronic communication device 120 is configured to generate the visual impression to the user illustrated in figure 5c, i.e. a complete virtual PIN pad 500 comprising the plurality of graphical symbols 501-512. In an embodiment, the touch display 129 of the electronic communication device 120 is further configured to sequentially display the plurality of image frames with a refresh rate of at least 24 image frames per second. In an embodiment, the processing circuitry 121 of the electronic communication device 120 is configured to store the plurality of image frames in a display buffer 127, wherein the touch display 129 is configured to retrieve the plurality of image frames from the display buffer 127.

In an embodiment, the plurality of image frames displayed by the touch display 129 of the electronic communication device 120 may comprise further image frames that for one or more of the plurality of graphical symbols 501-512 of the virtual PIN pad 500, comprises a further portion of the respective graphical symbol 501-512 different to the first and second portion thereof.

In an embodiment, the plurality of image frames displayed by the touch display 129 of the electronic communication device 120 may comprise further image frames, such as a third image frame, wherein the third image frame, for one or more of the plurality of graphical symbols 501-512 of the virtual PIN pad 500, comprises, i.e. shows only the first portion of the respective graphical symbol 501-512 of the virtual PIN pad 500. In other words, further image frames of the plurality of image frames may be identical to the first image frame or the second image frame.

In an embodiment, the plurality of image frames may be generated by the processing circuitry 121 of the electronic communication device 120 for each PIN authentication session. In an embodiment, the processing circuitry 121 is configured to determine for a given PIN authentication session a respective position of the respective graphical symbol 501-512 in all of the plurality of image frames, wherein the processing circuitry 121 is configured to arrange, for each of the plurality of graphical symbols 501-512 of the virtual PIN pad 500, the respective first portion and the respective second portion of the respective graphical symbol 501-512 of the virtual PIN pad 500 based on the respective position of the respective graphical symbol 501-512 determined for the current PIN authentication session. In an embodiment, the processing circuitry 121 of the electronic communication device 120 is further configured to change, for a new PIN authentication session, the respective position of the respective graphical symbol 501-512 of the virtual PIN pad 500 in the plurality of image frames, i.e. to scramble the virtual PIN pad 500 for each new PIN authentication session. Additionally or alternatively, the processing circuitry 121 of the electronic communication device 120 may be further configured to change, for a new PIN authentication session, the position and/or the size of the virtual PIN pad 500 in the plurality of image frames. For instance, in an embodiment, the virtual PIN pad 500 for a first PIN authentication session might be located in the lower right portion of the plurality of images frames, while for a subsequent second PIN authentication session the virtual PIN pad 500 might be located in the upper left portion of the plurality of images frames. Moreover, for the second PIN authentication session the virtual PIN pad 500 may have, for instance, twice the size as for the first PIN authentication session.

In a further embodiment, the plurality of image frames displayed by the touch display 129 of the electronic communication device 120 comprises further image frames, such as a fourth image frame, wherein the fourth image frame, for one or more of the plurality of graphical symbols 501-512 of the virtual PIN pad 500, comprises a fourth portion of a different graphical symbol of the plurality of graphical symbols 501-512 of the virtual PIN pad 500. For instance, in an embodiment, for the graphical symbol "9" 505, the fourth image frame may comprise, i.e. shows only a portion of a different graphical symbol, for instance, the graphical symbol "5" (at the location of the graphical symbol "9" 505). In a further embodiment, the plurality of image frames comprises a fifth image frame, wherein the fifth image frame, for at least one of the plurality of graphical symbols 501-512 of the virtual PIN pad 500, comprises a portion of a random graphic symbol of a plurality of further graphical symbols, such as randomly chosen portions of the letters "A" to "Z" or other known or randomly generated graphical symbols. In other words, in an embodiment, some image frames, such as the fifth image frame, may be mixed into the plurality of image frames that at a respective position of the virtual PIN pad 500 (different to the first, second and third image frames) do not contain portions of the respective graphical symbol 501-512 associated with that current position of the virtual PIN pad 500 but a portion of a randomly chosen further known or random graphical symbol (different to the plurality of graphical symbols 501-512 of the virtual PIN pad 500). The portion of a randomly chosen further known or random graphical symbol may be, for instance, a rotated portion of one of the plurality of graphical symbols 501-512 of the virtual PIN pad 500. Advantageously, this allows increasing the noise for a potential attacker trying to obtain information about the authentication operation. On average the number of these "noise" image frames, such as the fourth image frame, should be smaller than the number of image frames identical or similar to the first, second and third image frame.

In response to the sequence of image frames displayed by the touch display 129 and the visual impression of the user illustrated in figure 5c, the user may select, i.e. enter one or more of the plurality of graphical symbols 501-512 of the virtual PIN pad 500 by touching the respective locations on the touch display 129. Thus, in an embodiment, the touch display 129 of the electronic communication device 120 is further configured to generate, in response to such a touch operation of the touch display 129 by the user, a PIN pad signal. As already described above, the processing circuitry 121 of the electronic communication device 120, in turn, is configured to associate each PIN pad signal provided by the touch display 129 with one of the plurality of graphical symbols 501-512 of the virtual PIN pad 500 for performing the PIN authentication.

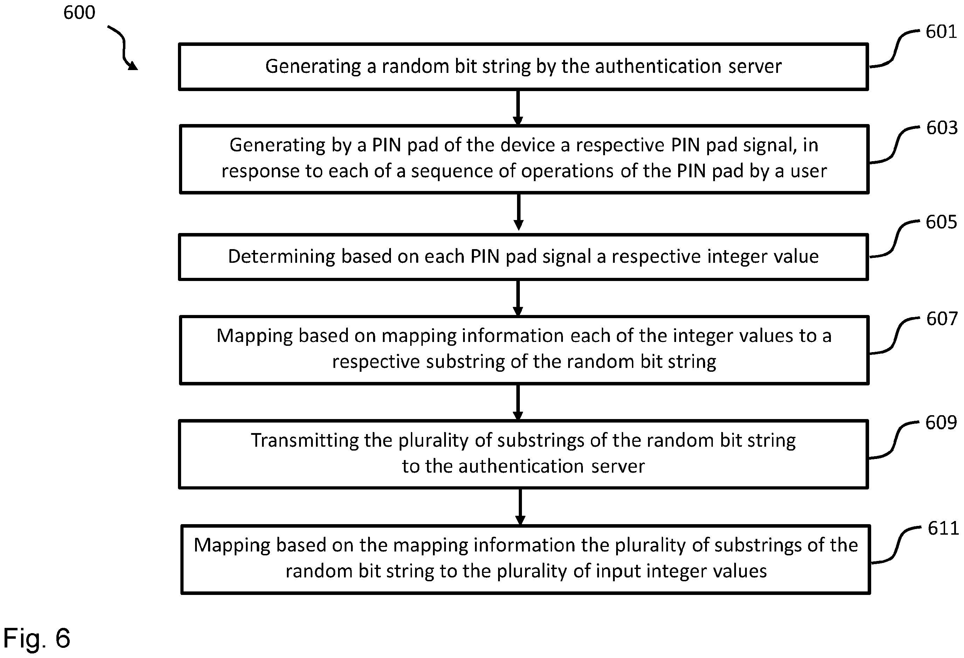

Figure 6 shows a flow diagram illustrating steps of a method 600 for performing an authentication session between the electronic communication device 120 and the authentication server 140 according to an embodiment. The method 600 comprises the steps of:
generating 601 a random bit string 180 by the authentication server 140;
generating 603 by the PIN pad 500 of the electronic communication device 120 a respective PIN pad signal, in response to each of a sequence of operations of the PIN pad 500 by the user 120a;
determining 605 based on each PIN pad signal a respective input integer value;
mapping 607 based on mapping information 170 each of the input integer values to a respective substring of the random bit string 180;
transmitting 609 the plurality of substrings of the random bit string 180 to the authentication server 140; and
mapping 611 based on the mapping information 170 the plurality of substrings of the random bit string 180 to the plurality of input integer values for processing the authentication session.

The method 600 can be performed by the electronic communication device 120, e.g. smartphone 120 in communication with the authentication server 140 and the security server 150. Thus, further features of the method 600 result directly from the structure and functionality of the electronic communication device 120 and the authentication server 140 as well as their different embodiments described above.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application.

Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. An electronic communication device (120) for performing an authentication session with an authentication server (140), wherein the electronic communication device (120) comprises:
a communication interface (123) configured to receive for the authentication session a random bit string (180) from the authentication server (140) and mapping information (170) from a security server (150), wherein the mapping information (170) defines a mapping of each of a plurality of integer values (160) to a respective substring of the random bit string (180);
a PIN pad (500) configured to generate, in response to each of a sequence of operations of the PIN pad (500) by a user (120a), a respective PIN pad signal;
a processing circuitry (121) configured to generate based on each PIN pad signal a respective input integer value and to determine based on the mapping information (170) for the respective input integer value the respective substring of the random bit string (180);
wherein the communication interface (123) is further configured, once a pre-defined number of input integer values have been entered, to transmit the plurality of substrings of the random bit string (180) to the authentication server (140) for processing the authentication session.

2. The electronic communication device (120) of claim 1, wherein the processing circuitry (121) is further configured to encrypt the plurality of substrings of the random bit string (180) and wherein the communication interface (123) is configured to transmit the encrypted plurality of substrings of the random bit string (180) to the authentication server (140).

3. The electronic communication device (120) of claim 1 or 2, wherein the electronic communication device (120) further comprises a memory (125) configured to store the random bit string (180) and/or the plurality of substrings of the random bit string (180).

4. The electronic communication device (120) of any one of the preceding claims, wherein at least two of the plurality of substrings of the random bit string (180) have the same size.

5. The electronic communication device (120) of any one of the preceding claims, wherein the communication interface (123) is configured to receive for a further authentication session from the authentication server (140) a further random bit string and further mapping information from the security server (150) for obtaining a further mapping configured to map each of the plurality of integer values to a respective substring of the further random bit string;
wherein the PIN pad (500) is configured to generate, in response to each of a further sequence of operations of the PIN pad (500) by the user (120a), a respective further PIN pad signal;
wherein the processing circuitry (121) is configured to generate based on each further PIN pad signal a respective further input integer value and to determine based on the further mapping information for the respective further input integer value the respective substring of the further random bit string; and
wherein the communication interface (123) is further configured, once a pre-defined number of substrings of the further random bit string have been obtained, to transmit the plurality of substrings of the further random bit string to the authentication server (140) for processing the further authentication session.

6. The electronic communication device (120) of any one of the preceding claims, wherein the electronic communication device (120) comprises a touch display (129) and wherein the PIN pad (500) is a virtual PIN pad (500) displayed on the touch display (129).

7. The electronic communication device (120) of claim 6, wherein the virtual PIN pad (500) comprises a plurality of graphical symbols (501-512) and wherein the touch display (129) is configured to sequentially display a plurality of image frames, including a first image frame and a second image frame, wherein the first image frame, for each of the plurality of graphical symbols (501-512), comprises a first portion of the respective graphical symbol (501-512) and wherein the second image frame, for one or more of the plurality of graphical symbols (501-512), comprises a second portion of the respective graphical symbol (501-512).

8. The electronic communication device (120) of claim 6 or 7, wherein the processing circuitry (121) is further configured to change, for each authentication session, a position and/or a size of the virtual PIN pad (500) displayed by the touch display (129).

9. An authentication server (140) for performing an authentication session with an electronic communication device (120), wherein the authentication server (140) comprises:
a processing circuitry (141) configured to generate a random bit string (180) for the authentication session; and
a communication interface (143) configured to send the random bit string (180) for the authentication session to the electronic communication device (120);
wherein the communication interface (143) is further configured to receive a plurality of substrings of the random bit string (180) from the electronic communication device (120); and
wherein the processing circuitry (141) is further configured to determine based on mapping information (170) provided by a security server (150) for the current authentication session for each of the plurality of substrings of the random bit string (180) a respective input integer value and to further process the authentication session based on the input integer values.

10. The authentication server (140) of claim 9, wherein the authentication server (140) further comprises a random number generator and wherein the processing circuitry (141) is configured to generate the random bit string (180) based on the random number generator.

11. The authentication server (140) of claim 10, wherein the communication interface (143) is configured to receive the mapping information (170) from the security server (150).

12. The authentication server (140) of claim 11, wherein the communication interface (143) is configured to receive the mapping information (170) from the security server (150), in response to generating and/or sending the random bit string (180) to the security server (150).

13. The authentication server (140) of claim 11 or 12, wherein the mapping information (170) received from the security server (150) is encrypted and/or digitally signed and wherein the processing circuitry (141) is configured to decrypt and/or verify the digital signature of the mapping information (170).

14. An electronic payment system (100), comprising:
an electronic communication device (120) according to any one of claims 1 to 8;
an authentication server (140) according to any one of claims 9 to 13; and
a security server (150) configured to provide the mapping information (170).

15. A method (600) for performing an authentication session between an electronic communication device (120) and an authentication server (140), wherein the method (600) comprises:
generating (601) a random bit string (180) by the authentication server (140);
sending the random bit string (180) to the electronic communication device (120) by the authentication server (140);
generating (603) by a PIN pad (500) of the electronic communication device (120) a respective PIN pad signal, in response to each of a sequence of operations of the PIN pad (500) by a user (120a);
determining (605) based on each PIN pad signal a respective input integer value;
mapping (607) based on mapping information (170) each of the input integer values to a respective substring of the random bit string (180);
transmitting (609) the plurality of substrings of the random bit string (180) to the authentication server (140); and
mapping (611) based on the mapping information (170) the plurality of substrings of the random bit string (180) to the plurality of input integer values for processing the authentication session.

## Patentansprüche

1. Elektronische Kommunikationsvorrichtung (120) zum Durchführen einer Authentifizierungssitzung mit einem Authentifizierungsserver (140), wobei die elektronische Kommunikationsvorrichtung (120) umfasst:
eine Kommunikationsschnittstelle (123), die ausgebildet ist, für die Authentifizierungssitzung eine zufällige Bitfolge (180) von dem Authentifizierungsserver (140) und Abbildungsinformationen (170) von einem Sicherheitsserver (150) zu empfangen, wobei die Abbildungsinformationen (170) ein Abbilden von jedem einer Vielzahl von ganzzahligen Werten (160) auf eine jeweilige Teilfolge der zufälligen Bitfolge (180) definieren;
ein PIN-Pad (500), das ausgebildet ist, in Reaktion auf jede einer Reihe von Operationen des PIN-Pad (500) durch einen Benutzer (120a) ein entsprechendes PIN-Pad-Signal zu erzeugen;
eine Verarbeitungsschaltung (121), die ausgebildet ist, basierend auf jedem PIN-Pad-Signal einen entsprechenden eingegebenen ganzzahligen Wert zu erzeugen und basierend auf den Abbildungsinformationen (170) für den entsprechenden eingegebenen ganzzahligen Wert die entsprechende Teilfolge der zufälligen Bitfolge (180) zu bestimmen;
wobei die Kommunikationsschnittstelle (123) ferner ausgebildet ist, sobald eine vordefinierte Anzahl von eingegebenen ganzzahligen Werten eingegeben wurde, die Vielzahl von Teilfolgen der zufälligen Bitfolge (180) an den Authentifizierungsserver (140) zum Verarbeiten der Authentifizierungssitzung zu übertragen.

2. Elektronische Kommunikationsvorrichtung (120) nach Anspruch 1, wobei die Verarbeitungsschaltung (121) ferner zum Verschlüsseln der mehreren Teilfolgen der zufälligen Bitfolge (180) ausgebildet ist und wobei die Kommunikationsschnittstelle (123) zum Übertragen der verschlüsselten Vielzahl von Teilfolgen der zufälligen Bitfolge (180) an den Authentifizierungsserver (140) ausgebildet ist.

3. Elektronische Kommunikationsvorrichtung (120) nach Anspruch 1 oder 2, wobei die elektronische Kommunikationsvorrichtung (120) ferner einen Speicher (125) umfasst, der ausgebildet ist, die zufällige Bitfolge (180) und/oder die Vielzahl von Teilfolgen der zufälligen Bitfolge (180) zu speichern.

4. Elektronische Kommunikationsvorrichtung (120) nach einem der vorangehenden Ansprüche, wobei mindestens zwei der Vielzahl von Teilfolgen der zufälligen Bitfolge (180) die gleiche Größe haben.

5. Elektronische Kommunikationsvorrichtung (120) nach einem der vorhergehenden Ansprüche, wobei die Kommunikationsschnittstelle (123) ausgebildet ist, für eine weitere Authentifizierungssitzung von dem Authentifizierungsserver (140) eine weitere zufällige Bitfolge und weitere Abbildungsinformationen von dem Sicherheitsserver (150) zum Erhalten einer weiteren Abbildung zu empfangen, die ausgebildet ist, jeden der Vielzahl von ganzzahligen Werten auf eine jeweilige Teilfolge der weiteren zufälligen Bitfolge abzubilden;
wobei das PIN-Pad (500) ausgebildet ist, in Reaktion auf jede einer weiteren Reihe von Operationen des PIN-Pad (500) durch den Benutzer (120a) ein jeweiliges weiteres PIN-Pad-Signal zu erzeugen;
wobei die Verarbeitungsschaltung (121) ausgebildet ist, basierend auf jedem weiteren PIN-Pad-Signal einen jeweiligen weiteren eingegebenen ganzzahligen Wert zu erzeugen und basierend auf den weiteren Abbildungsinformationen für den jeweiligen weiteren eingegebenen ganzzahligen Wert die jeweilige Teilfolge der weiteren zufälligen Bitfolge zu bestimmen; und
wobei die Kommunikationsschnittstelle (123) ferner ausgebildet ist, sobald eine vordefinierte Anzahl von Teilfolgen der weiteren zufälligen Bitfolge erhalten wurde, die mehreren Teilfolgen der weiteren zufälligen Bitfolge zur Verarbeitung der weiteren Authentifizierungssitzung an den Authentifizierungsserver (140) zu übertragen.

6. Elektronische Kommunikationsvorrichtung (120) nach einem der vorhergehenden Ansprüche, wobei die elektronische Kommunikationsvorrichtung (120) ein Berührungsdisplay (129) umfasst und wobei das PIN-Pad (500) ein virtuelles PIN-Pad (500) ist, das auf dem Touch-Display (129) angezeigt wird.

7. Elektronische Kommunikationsvorrichtung (120) nach Anspruch 6, wobei das virtuelle PIN-Pad (500) eine Vielzahl von grafischen Symbolen (501-512) umfasst und wobei die Berührungsanzeige (129) ausgebildet ist, sequentiell eine Vielzahl von Einzelbildern anzuzeigen, einschließlich eines ersten Bildrahmens und eines zweiten Bildrahmens, wobei der erste Bildrahmen für jedes der Vielzahl von grafischen Symbolen (501-512) einen ersten Abschnitt des jeweiligen grafischen Symbols (501-512) umfasst und wobei der zweite Bildrahmen für eines oder mehrere der mehreren grafischen Symbole (501-512) einen zweiten Abschnitt des jeweiligen grafischen Symbols (501-512) umfasst.

8. Elektronische Kommunikationsvorrichtung (120) nach Anspruch 6 oder 7, wobei die Verarbeitungsschaltung (121) ferner ausgebildet ist, für jede Authentifizierungssitzung eine Position und/oder eine Größe des virtuellen PIN-Pads (500) zu ändern, das durch das Touch-Display (129) angezeigt wird.

9. Authentifizierungsserver (140) zum Durchführen einer Authentifizierungssitzung mit einer elektronischen Kommunikationsvorrichtung (120), wobei der Authentifizierungsserver (140) umfasst:
eine Verarbeitungsschaltung (141), die ausgebildet ist, eine zufällige Bitfolge (180) für die Authentifizierungssitzung zu erzeugen; und
eine Kommunikationsschnittstelle (143), die ausgebildet ist, die zufällige Bitfolge (180) für die Authentifizierungssitzung an das elektronische Kommunikationsgerät (120) zu senden;
wobei die Kommunikationsschnittstelle (143) ferner ausgebildet ist, mehrere Teilfolgen der zufälligen Bitfolge (180) von der elektronischen Kommunikationsvorrichtung (120) zu empfangen; und
wobei die Verarbeitungsschaltung (141) ferner ausgebildet ist, basierend auf Abbildungsinformationen (170), die von einem Sicherheitsserver (150) für die aktuelle Authentifizierungssitzung für jede der Vielzahl von Teilfolgen der zufälligen Bitfolge (180) bereitgestellt sind, einen jeweiligen eingegebenen ganzzahligen Wert zu bestimmen und die Authentifizierungssitzung basierend auf den eingegebenen ganzzahligen Werten weiter zu verarbeiten.

10. Authentifizierungsserver (140) nach Anspruch 9, wobei der Authentifizierungsserver (140) ferner einen Zufallszahlengenerator umfasst und wobei die Verarbeitungsschaltung (141) ausgebildet ist, die zufällige Bitfolge (180) basierend auf dem Zufallszahlengenerator zu erzeugen.

11. Authentifizierungsserver (140) nach Anspruch 10, wobei die Kommunikationsschnittstelle (143) ausgebildet ist, die Abbildungsinformationen (170) von dem Sicherheitsserver (150) zu empfangen.

12. Authentifizierungsserver (140) nach Anspruch 11, wobei die Kommunikationsschnittstelle (143) ausgebildet ist, die Abbildungsinformationen (170) von dem Sicherheitsserver (150) als Reaktion auf das Erzeugen und/oder Senden der zufälligen Bitfolge (180) an den Sicherheitsserver (150) zu empfangen.

13. Authentifizierungsserver (140) nach Anspruch 11 oder 12, wobei die von dem Sicherheitsserver (150) empfangenen Abbildungsinformationen (170) verschlüsselt und/oder digital signiert sind und wobei die Verarbeitungsschaltung (141) zum Entschlüsseln und/oder Verifizieren der digitalen Signatur der Abbildungsinformationen (170) ausgebildet ist.

14. Elektronisches Zahlungssystem (100), umfassend:
eine elektronische Kommunikationsvorrichtung (120) nach einem der Ansprüche 1 bis 8;
einen Authentifizierungsserver (140) nach einem der Ansprüche 9 bis 13; und
einen Sicherheitsserver (150), der ausgebildet ist, die Abbildungsinformationen (170) bereitzustellen.

15. Verfahren (600) zum Durchführen einer Authentifizierungssitzung zwischen einer elektronischen Kommunikationsvorrichtung (120) und einem Authentifizierungsserver (140), wobei das Verfahren (600) umfasst:
Erzeugen (601) einer zufälligen Bitfolge (180) durch den Authentifizierungsserver (140);
Senden der zufälligen Bitfolge (180) an die elektronische Kommunikationsvorrichtung (120) durch den Authentifizierungsserver (140);
Erzeugen (603) eines entsprechenden PIN-Pad-Signals durch ein PIN-Pad (500) der elektronischen Kommunikationsvorrichtung (120) als Reaktion auf jede einer Reihe von Operationen des PIN-Pad (500) durch einen Benutzer (120a);
Bestimmen (605) basierend auf jedem PIN-Pad-Signal eines entsprechenden eingegebenen ganzzahligen Werts;
Zuordnen (607) basierend auf Abbildungsinformationen (170) jedes der eingegebenen ganzzahligen Werte zu einer jeweiligen Teilfolge der zufälligen Bitfolge (180);
Übertragen (609) der Vielzahl von Teilfolgen der zufälligen Bitfolge (180) an den Authentifizierungsserver (140); und
Abbilden (611) basierend auf den Abbildungsinformationen (170) der Vielzahl von Teilfolgen der zufälligen Bitfolge (180) auf die Vielzahl von eingegebenen ganzzahligen Werten zum Verarbeiten der Authentifizierungssitzung.

## Revendications

1. Dispositif de communication électronique (120) pour effectuer une session d'authentification avec un serveur d'authentification (140), dans lequel le dispositif de communication électronique (120) comprend:
une interface de communication (123) configurée pour recevoir pour la session d'authentification une chaîne de bits aléatoire (180) du serveur d'authentification (140) et des informations de mappage (170) d'un serveur de sécurité (150), dans lequel les informations de mappage (170) définissent un mappage de chacune d'une pluralité de valeurs entières (160) sur une sous-chaîne respective de la chaîne de bits aléatoires (180);
un clavier PIN (500) configuré pour générer, en réponse à chacune d'une séquence d'opérations du clavier PIN (500) par un utilisateur (120a), un signal de clavier PIN respectif;
un circuit de traitement (121) configuré pour générer sur la base de chaque signal de clavier PIN une valeur entière d'entrée respective et pour déterminer sur la base des informations de mappage (170) pour la valeur entière d'entrée respective la sous-chaîne respective de la chaîne de bits aléatoires (180);
dans lequel l'interface de communication (123) est en outre configurée, une fois qu'un nombre prédéfini de valeurs entières d'entrée a été saisie, pour transmettre la pluralité de sous-chaînes de la chaîne de bits aléatoires (180) au serveur d'authentification (140) pour traiter l'authentification session.

2. Dispositif de communication électronique (120) selon la revendication 1, dans lequel le circuit de traitement (121) est en outre configuré pour crypter la pluralité de sous-chaînes de la chaîne de bits aléatoires (180) et dans lequel l'interface de communication (123) est configurée pour transmettre le pluralité cryptée de sous-chaînes de la chaîne binaire aléatoire (180) au serveur d'authentification (140).

3. Dispositif de communication électronique (120) selon la revendication 1 ou 2, dans lequel le dispositif de communication électronique (120) comprend en outre une mémoire (125) configurée pour stocker la chaîne de bits aléatoire (180) et/ou la pluralité de sous-chaînes de la chaîne binaire aléatoire chaîne de bits (180).

4. Dispositif de communication électronique (120) selon l'une quelconque des revendications précédentes, dans lequel au moins deux de la pluralité de sous-chaînes de la chaîne de bits aléatoires (180) ont la même taille.

5. Dispositif de communication électronique (120) selon l'une quelconque des revendications précédentes, dans lequel l'interface de communication (123) est configurée pour recevoir pour une autre session d'authentification du serveur d'authentification (140) une autre chaîne de bits aléatoire et d'autres informations de mappage de le serveur de sécurité (150) pour obtenir un autre mappage configuré pour mapper chacune de la pluralité de valeurs entières à une sous-chaîne respective de l'autre chaîne de bits aléatoires;
dans lequel le clavier PIN (500) est configuré pour générer, en réponse à chacune d'une autre séquence d'opérations du clavier PIN (500) par l'utilisateur (120a), un autre signal de clavier PIN respectif;
dans lequel le circuit de traitement (121) est configuré pour générer sur la base de chaque autre signal de clavier PIN une autre valeur entière d'entrée respective et pour déterminer sur la base des informations de mappage supplémentaires pour l'autre valeur entière d'entrée respective la sous-chaîne respective de l'autre chaîne de bits aléatoire; et
dans lequel l'interface de communication (123) est en outre configurée, une fois qu'un nombre prédéfini de sous-chaînes de l'autre chaîne de bits aléatoires a été obtenu, pour transmettre la pluralité de sous-chaînes de l'autre chaîne de bits aléatoires au serveur d'authentification (140) pour traitement la session d'authentification ultérieure.

6. Dispositif de communication électronique (120) selon l'une quelconque des revendications précédentes, dans lequel le dispositif de communication électronique (120) comprend un écran tactile (129) et dans lequel le clavier PIN (500) est un clavier PIN virtuel (500) affiché sur l'écran tactile (129).

7. Dispositif de communication électronique (120) selon la revendication 6, dans lequel le clavier NIP virtuel (500) comprend une pluralité de symboles graphiques (501-512) et dans lequel l'écran tactile (129) est configuré pour afficher séquentiellement une pluralité de trames d'images, comprenant un premier cadre d'image et un deuxième cadre d'image, dans lequel le premier cadre d'image, pour chacun de la pluralité de symboles graphiques (501-512), comprend une première partie du symbole graphique respectif (501-512) et dans lequel le deuxième une trame d'image, pour un ou plusieurs de la pluralité de symboles graphiques (501-512), comprend une seconde partie du symbole graphique respectif (501-512).

8. Dispositif de communication électronique (120) selon la revendication 6 ou 7, dans lequel le circuit de traitement (121) est en outre configuré pour changer, pour chaque session d'authentification, une position et/ou une taille du clavier PIN virtuel (500) affiché par l'écran tactile (129).

9. Un serveur d'authentification (140) pour effectuer une session d'authentification avec un dispositif de communication électronique (120), dans lequel le serveur d'authentification (140) comprend:
un circuit de traitement (141) configuré pour générer une chaîne de bits aléatoire (180) pour la session d'authentification; et
une interface de communication (143) configurée pour envoyer la chaîne de bits aléatoire (180) pour la session d'authentification au dispositif de communication électronique (120);
dans lequel l'interface de communication (143) est en outre configurée pour recevoir une pluralité de sous-chaînes de la chaîne binaire aléatoire (180) du dispositif de communication électronique (120); et
dans lequel le circuit de traitement (141) est en outre configuré pour déterminer sur la base des informations de mappage (170) fourni par un serveur de sécurité (150) pour la session d'authentification en cours pour chacune de la pluralité de sous-chaînes de la chaîne binaire aléatoire (180) une valeur entière d'entrée respective et pour poursuivre le traitement de la session d'authentification sur la base des valeurs entières d'entrée.

10. Serveur d'authentification (140) selon la revendication 9, dans lequel le serveur d'authentification (140) comprend en outre un générateur de nombres aléatoires et dans lequel le circuit de traitement (141) est configuré pour générer la chaîne de bits aléatoires (180) sur la base du générateur de nombres aléatoires.

11. Serveur d'authentification (140) selon la revendication 10, dans lequel l'interface de communication (143) est configurée pour recevoir les informations de mappage (170) du serveur de sécurité (150).

12. Serveur d'authentification (140) selon la revendication 11, dans lequel l' interface de communication (143) est configurée pour recevoir les informations de mappage (170) du serveur de sécurité (150), en réponse à la génération et/ou l'envoi de la chaîne de bits aléatoire ( 180) au serveur de sécurité (150).

13. Serveur d'authentification (140) selon la revendication 11 ou 12, dans lequel les informations de mappage (170) reçues du serveur de sécurité (150) sont chiffrées et/ou signées numériquement et dans lequel le circuit de traitement (141) est configuré pour déchiffrer et/ou ou vérifier la signature numérique des informations de mappage (170).

14. Système de paiement électronique (100), comprenant:
un dispositif de communication électronique (120) selon l'une quelconque des revendications 1 à 8;
un serveur d'authentification (140) selon l'une quelconque des revendications 9 à 13; et
un serveur de sécurité (150) configuré pour fournir les informations de mappage (170).

15. Procédé (600) pour effectuer une session d'authentification entre un dispositif de communication électronique (120) et un serveur d'authentification (140), dans lequel le procédé (600) comprend:
générer (601) une chaîne de bits aléatoire (180) par le serveur d'authentification (140);
envoyer la chaîne binaire aléatoire (180) au dispositif de communication électronique (120) par le serveur d'authentification (140);
générer (603) par un clavier PIN (500) du dispositif de communication électronique (120) un signal de clavier PIN respectif, en réponse à chacune d'une séquence d'opérations du clavier PIN (500) par un utilisateur (120a);
déterminer (605) sur la base de chaque signal de clavier PIN une valeur entière d'entrée respective;
mapper (607) sur la base d'informations de mappage (170) chacune des valeurs entières d'entrée à une sous-chaîne respective de la chaîne de bits aléatoires (180);
transmettre (609) la pluralité de sous-chaînes de la chaîne binaire aléatoire (180) au serveur d'authentification (140); et
mapper (611) sur la base des informations de mappage (170) la pluralité de sous-chaînes de la chaîne binaire aléatoire (180) à la pluralité de valeurs entières d'entrée pour traiter la session d'authentification.
